(19) **Europäisches Patentamt / European Patent Office / Office européen des brevets**

(11) **EP 4 495 084 A1**

(12) # EUROPEAN PATENT APPLICATION

(43) Date of publication:
22.01.2025 Bulletin 2025/04

(21) Application number: 23306231.4

(22) Date of filing: 17.07.2023

(51) International Patent Classification (IPC):
*C04B 28/08* (2006.01)   *C04B 28/00* (2006.01)
*C04B 111/20* (2006.01)

(52) Cooperative Patent Classification (CPC):
(C-Sets available)
C04B 2111/2023                          (Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• Ecocem Materials Limited
  Dublin 3 D03E0C0 (IE)
• Institut National des Sciences Appliquées
  de Toulouse
  31077 Toulouse Cedex 4 (FR)
• Université Paul Sabatier Toulouse III
  31400 Toulouse (FR)

(72) Inventors:
• AZAR, Patrick
  31077 TOULOUSE CEDEX 4 (FR)
• CYR, Martin
  31077 TOULOUSE CEDEX 4 (FR)
• PATAPY, Cédric
  31077 TOULOUSE CEDEX 4 (FR)
• SAMSON, Gabriel
  31077 TOULOUSE CEDEX 4 (FR)
• FROUIN, Laurent
  75012 PARIS (FR)
• BLOTEVOGEL, Simon
  75012 PARIS (FR)
• ALFANI, Roberta
  75012 PARIS (FR)

(74) Representative: Plasseraud IP
104 Rue de Richelieu
CS92104
75080 Paris Cedex 02 (FR)

(54) **HYDRAULIC BINDER BASED COMPOSITIONS WITH REDUCED ALKALI-SILICA REACTION**

(57)   Alkali-activated hydraulic binders, as well as concrete and mortar compositions comprising those, with reduced alkali-silica reaction (ASR) are disclosed. In particular, the concrete and mortar compositions featuring reduced ASR herein disclosed, comprise reactive silica containing aggregates and alkali-activated hydraulic binders, preferably containing ground granulated blast furnace slag, which result in hardened products with high interstitial pH which feature excellent mechanical properties, while at the same time reducing effectively expansion (and ultimately cracking) due to ASR.

EP 4 495 084 A1

(52) Cooperative Patent Classification (CPC): (Cont.)

C-Sets
**C04B 28/08, C04B 7/02, C04B 7/32, C04B 7/323,
C04B 12/04, C04B 14/06, C04B 14/10,
C04B 14/041, C04B 14/303, C04B 18/08,
C04B 18/149, C04B 18/0409, C04B 20/008,
C04B 22/10, C04B 22/062, C04B 2103/0021;
C04B 28/08, C04B 7/02, C04B 7/32, C04B 7/323,
C04B 12/04, C04B 14/10, C04B 14/041,
C04B 14/303, C04B 18/08, C04B 18/149,
C04B 18/0409, C04B 20/008, C04B 22/10,
C04B 22/062, C04B 40/0608, C04B 2103/0021;
C04B 28/08, C04B 7/32, C04B 7/323, C04B 12/04,
C04B 14/06, C04B 14/10, C04B 14/041,
C04B 14/303, C04B 18/149, C04B 18/0409,
C04B 20/008, C04B 2103/0021;
C04B 28/08, C04B 7/32, C04B 7/323, C04B 12/04,
C04B 14/10, C04B 14/041, C04B 14/303,
C04B 18/149, C04B 18/0409, C04B 20/008,
C04B 40/0608, C04B 2103/0021;
C04B 28/08, C04B 7/32, C04B 7/323, C04B 14/06,
C04B 14/10, C04B 14/041, C04B 14/303,
C04B 18/149, C04B 18/0409, C04B 20/008,
C04B 22/062, C04B 2103/0021;
C04B 28/08, C04B 7/32, C04B 7/323, C04B 14/06,
C04B 14/10, C04B 14/041, C04B 14/303,
C04B 18/149, C04B 18/0409, C04B 20/008,
C04B 22/10, C04B 2103/0021;
C04B 28/08, C04B 7/32, C04B 7/323, C04B 14/10,
C04B 14/041, C04B 14/303, C04B 18/149,
C04B 18/0409, C04B 20/008, C04B 22/062,
C04B 40/0608, C04B 2103/0021;
C04B 28/08, C04B 7/32, C04B 7/323, C04B 14/10,
C04B 14/041, C04B 14/303, C04B 18/149,
C04B 18/0409, C04B 20/008, C04B 22/10,
C04B 40/0608, C04B 2103/0021;**
C04B 28/006, C04B 7/32, C04B 7/323,
C04B 12/04, C04B 14/06, C04B 14/10,
C04B 14/041, C04B 14/303, C04B 18/141,
C04B 18/149, C04B 18/0409, C04B 20/008,
C04B 22/10, C04B 22/062, C04B 2103/0021;
C04B 28/006, C04B 7/32, C04B 7/323,
C04B 12/04, C04B 14/10, C04B 14/041,
C04B 14/303, C04B 18/141, C04B 18/149,
C04B 18/0409, C04B 20/008, C04B 22/10,
C04B 22/062, C04B 40/0608, C04B 2103/0021

**Description**

This disclosure pertains to the field of alkali-activated hydraulic binder compositions, in particular binder compositions comprising Ground Granulated Blast Furnace Slag (GGBS), for preparing construction compositions which are able to set and harden when mixed with water, such as mortars and concretes, featuring reduced alkali-silica reaction (ASR).

Concrete and mortars compositions are construction products comprising aggregates, a hydraulic binder, such as a cement, and other additives, which are intended to be mixed with water to obtain, after reaction, a hardened construction product (hardened concrete or hardened mortar).

Among the cements typically used, ordinary Portland cement (OPC) production has a strong and negative impact on the environment due to the emissions of large quantities of carbon dioxide. The production of cement inherently generates $CO_2$ during the calcination of the raw materials at very high temperature (1450°C) in a furnace through decarbonation of the limestone (Eq. (1)):

$$CaCO_3 \text{ (s)} \rightarrow CaO \text{ (s)} + CO_2 \text{ (g)} \qquad (1)$$

In addition, carbon dioxide is released as a result of the combustion of the fossil fuels needed to heat the furnace. By adding the additional emissions of grinding, between 750 and 900 kg of $CO_2$ are released per ton of Portland cement. Overall, the cement industry is responsible for 7 to 9% of the global carbon dioxide emissions.

The detrimental impact of the Portland cement is aggravated by its high demand in water for the complete hydration. Moreover, handling Portland cement may lead to health issues (such as allergy) due, in particular, to its high alkalinity (pH higher than 13). In addition, hazardous elements as hexavalent Chromium (Cr (VI)) may be released upon kneading, which is also toxic for the workers. Although Cr (VI) reducing agents (as ferrous sulfate) are normally included in the cement powder, their efficiency is limited in time. Building workers, in particular those in the third world, are not expected to often check the deadline related to such treatments.

Most current research on new binders aims to replace cement in various applications with hydraulic binders having a lower environmental impact. In this context, hydraulic binder compositions having low carbon impact, have been developed by replacing at least a part of Portland cement with Ground Granulated Blast Furnace Slag (GGBS), which is a by-product of iron industry, as disclosed for instance in documents WO 2017/198930 or WO 2019/110134. GGBS can be used in partial substitution of cement or used alone by adding some chemical activators (such as alkalis or sulfates).

It is important to note that the use of a GGBS is not only environmentally friendly but also leads to several enhanced properties such as high resistance to sulfate attack, low permeability, good resistance in a chemically aggressive environment, low heat of hydration (required in massive structures), excellent durability in general, possibility of immobilization of heavy metals or radionuclides, etc. Another benefit of GGBS based products is their low water demand to get appropriate rheological properties. This is also important from both environmental and societal point of view. Indeed, there is a dramatic reduction of water resources over the world, not only in arid regions, leading, in particular, to geopolitical tensions and wars. In this regard the benefits of decreasing the amount of water used in cementitious is not anecdotal taking into account the huge amount of cementitious materials consumed over the world.

Concrete and mortar products comprising alkali-activated GGBS are prepared by mixing GGBS with an alkali activator. When compared to traditional concretes and mortars, alkali-activated materials may achieve faster and higher strengths, as well as better durability. The alkali activator solution comprises an important content of alkalis, and when mixed with the GGBS, the silica and calcium containing compounds of the GGBS are dissolved, forming a hydrated calcium silica gel which leads to the setting and hardening of the product.

However, the high alkali content present may cause a high risk of developing alkali-silica reaction (ASR) in the hardened products, not only for GGBS containing binders but also for other types of alkali-activated binders. ASR is particularly problematic when the aggregate of the concrete and mortars compositions comprises high levels of reactive silica. Indeed, ASR is a chemical reaction produced between reactive silica contained in the aggregates and the alkali present in the hardened product (hardened mortar or hardened concrete) featuring a high pH in the pore solution (alkali originating from the alkali activator comprised in the binder), which results in the formation of a silica gel (ASR gel), expanding and producing the cracking of the product, which ultimately affects the product durability and resistance.

Different solutions have been proposed to reduce ASR in conventional Portland cement-based materials, such as the use of low alkali content, the use of non-reactive aggregates (i.e. not containing reactive silica) or the addition of lithium to the concrete. In addition, some studies have shown that the addition of minerals containing aluminum or aluminum sources to Portland cement concrete appears to be effective in reducing the dissolution of silica from the aggregate and consequently the reduction of expansions due to ASR.

However, the solutions proposed to reduce ASR in conventional Portland cement-based systems may not be adequate when the using hydraulic binders comprising alkali-activated GGBS. For example, the addition of a high-concentration aluminum source at an early age in alkali-activated slags can cause inhibition of slag dissolution, thus

EP 4 495 084 A1

reducing the material's mechanical properties. On the other hand, using a low alkali content is also not feasible due to the use of the alkali activator in those products, which results in hardened products with a high interstitial pH (often with an interstitial pH higher than 13).

There is accordingly a need to develop alkali-activated hydraulic binders, as well as concrete and mortar compositions, which are effective for a wide variety of alkali-activated hydraulic binders, and in particular for alkali-activated GGBS-based hydraulic binders, as well as concrete and mortar compositions prepared with said binders, which are effective in reducing the development of alkali-silica reaction and, accordingly, are susceptible to form, respectively, hardened concrete and hardened mortar products with high interstitial pH which feature excellent mechanical properties, while at the same time reducing effectively expansion (and ultimately cracking) due to ASR.

that context, the present invention provides construction compositions, including alkali-activated hydraulic binders, as well as mortar and concrete compositions, which solve some of the issues encountered by the prior art. These compositions are effective in reducing the development of ASR, wherein said compositions are susceptible to form hardened constructions products (including both hardened mortar products and hardened concrete products) with an interstitial solution with high pH.

One aspect of the present invention provides a hydraulic binder composition comprising:

- an alkali activator; preferably selected from the group consisting of $Na_2CO_3$, $Li_2CO_3$, $K_2CO_3$, $Na_2SiO_3$, $Li_2SiO_3$, $K_2SiO_3$, NaOH and KOH, more preferably $Na_2CO_3$;

- an [$Al^{3+}$] source in a concentration $\leq 10$ dry weight%, preferably $\leq 6$ dry weight%, more preferably between 1 dry weight% and 5 dry weight%, being said % relative to the total dry weight of the binder;

wherein the [$Al^{3+}$] source features a solubility profile, at pH= 13 and 20°C, comprising:

  ○ [$Al^{3+}$] $\leq 3$ mM between 0 and 2 days;

  ○ [$Al^{3+}$] $\geq 3.5$ mM after 28 days.

In particular, the alkali-activated hydraulic binders disclosed herein comprise precursors containing silica, in particular those described in the present disclosure, such as GGBS.

Thus, a particular aspect of the present invention refers to a hydraulic binder composition comprising:

- between 35 dry weight% and 95 dry weight%, preferably between 50 dry weight% and 80 dry weight%, more preferably between 60 dry weight% and 75 dry weight%, of ground granulated blast furnace slag, being said % relative to the total dry weight of the binder;

- an alkali activator; preferably selected from the group consisting of $Na_2CO_3$, $Li_2CO_3$, $K_2CO_3$, $Na_2SiO_3$, $Li_2SiO_3$, $K_2SiO_3$, NaOH and KOH, more preferably $Na_2CO_3$;

- an [$Al^{3+}$] source in a concentration $\leq 10$ dry weight%, preferably $\leq 6$ dry weight%, more preferably between 1 dry weight% and 5 dry weight%, being said % relative to the total dry weight of the binder;

wherein the [$Al^{3+}$] source features a solubility profile, at pH= 13 and 20°C, comprising:

  ○ [$Al^{3+}$] $\leq 3$ mM between 0 and 2 days;

  ○ [$Al^{3+}$] $\geq 3.5$ mM after 28 days.

Another aspect of the present invention provides a concrete composition or a mortar composition susceptible to form a hardened mortar product;

  the concrete composition being susceptible to form a hardened concrete product and the mortar composition being susceptible to form a hardened mortar product;

  said concrete composition and said mortar composition comprising:

- a hydraulic binder comprising an alkali activator; preferably selected from the group consisting of $Na_2CO_3$, $Li_2CO_3$, $K_2CO_3$, $Na_2SiO_3$, $Li_2SiO_3$, $K_2SiO_3$, NaOH and KOH, more preferably $Na_2CO_3$;

4

- aggregates comprising a reactive silica source;

- an [Al$^{3+}$] source in a concentration $\leq$ 10 dry weight%, preferably $\leq$ 6 dry weight%, more preferably between 1 dry weight% and 5 dry weight%, being said % relative to the total dry weight of the hydraulic binder;

wherein the [Al$^{3+}$] source features a solubility profile, at pH= 13 and 20°C, comprising:

  ○ [Al$^{3+}$] $\leq$ 3 mM between 0 and 2 days;

  ○ [Al$^{3+}$] $\geq$ 3.5 mM after 28 days.

In particular another aspect of the present invention provides a concrete composition or a mortar composition susceptible to form a hardened mortar product;

the concrete composition being susceptible to form a hardened concrete product and the mortar composition being susceptible to form a hardened mortar product;

said concrete composition and said mortar composition comprising:

- a hydraulic binder comprising:

  ○ between 35 dry weight% and 95 dry weight%, preferably between 50 dry weight% and 80 dry weight%, more preferably between 60 dry weight% and 75 dry weight%, of ground granulated blast furnace slag, being said % relative to the total dry weight of the binder;

  ○ an alkali activator; preferably selected from the group consisting of Na$_2$CO$_3$, Li$_2$CO$_3$, K$_2$CO$_3$, Na$_2$SiO$_3$, Li$_2$SiO$_3$, K$_2$SiO$_3$, NaOH and KOH, more preferably Na$_2$CO$_3$;

- aggregates comprising a reactive silica source;

- an [Al$^{3+}$] source in a concentration $\leq$ 10 dry weight%, preferably $\leq$ 6 dry weight%, more preferably between 1 dry weight% and 5 dry weight%, being said % relative to the total dry weight of the hydraulic binder;

wherein the [Al$^{3+}$] source features a solubility profile, at pH= 13 and 20°C, comprising:

  ○ [Al$^{3+}$] $\leq$ 3 mM between 0 and 2 days;

  ○ [Al$^{3+}$] $\geq$ 3.5 mM after 28 days.

In particular, the concrete and mortar compositions of the invention are useful in reducing the development of the ASR when alkali-activated binders, and in particular alkali-activated binders comprising GGBS, are used in combination with aggregates comprising reactive silica, compositions susceptible to form hardened concrete products and the hardened mortar products comprise an interstitial solution pH $\geq$ 12, preferably pH $\geq$ 13, more preferably pH $\geq$ 13.5; and an alkali content, measured as Na$_2$O$_{eq}$ in dry weight% relative to the total dry weight of the hydraulic binder, higher than, in an increasing order of preference, 1, 1.5, 2, 3; and preferably, in an increasing order of preference, between 3 and 10, 3 and 8, 3 and 7.

Another aspect of the invention refers to a hardened concrete product obtainable from a concrete composition as defined in the claims and the present description, wherein said hardened concrete product is obtained by setting and hardening of a mixture of the concrete composition according to the present invention and water.

Yet another aspect of the invention refers to a hardened mortar product obtainable from a mortar composition as defined in the claims and the present description, wherein said hardened mortar product is obtained by setting and hardening of a mixture of the mortar composition according to the present invention and water.

Another aspect of the invention refers to the use, in a concrete composition or in a mortar composition comprising aggregate containing a reactive silica source and an alkali-activated hydraulic binder, said alkali-activated hydraulic binder preferably comprising precursors containing silica, such as ground granulated blast furnace slag; being the concrete composition susceptible to form a hardened concrete product and being the mortar composition being susceptible to form a hardened mortar product;

of an $[Al^{3+}]$ source for reducing alkali-silica reaction;

wherein the $[Al^{3+}]$ source features a solubility profile, at pH= 13 and 20°C, comprising:

○ $[Al^{3+}] \leq 3$ mM between 0 and 2 days;

○ $[Al^{3+}] \geq 3.5$ mM after 28 days.

Yet another aspect of the invention refers to a method for reducing alkali-silica reaction in a concrete composition or in a mortar composition comprising aggregate containing a reactive silica source and an alkali-activated hydraulic binder, said alkali-activated hydraulic binder preferably comprising precursors containing silica, such as ground granulated blast furnace slag; being the concrete composition susceptible to form a hardened concrete product and being the mortar composition being susceptible to form a hardened mortar product; wherein said method comprises adding an $[Al^{3+}]$ source to said alkali-activated hydraulic binder, or to said concrete composition or said mortar composition comprising aggregate containing a reactive silica source; and wherein the $[Al^{3+}]$ source features a solubility profile, at pH= 13 and 20°C, comprising:

○ $[Al^{3+}] \leq 3$ mM between 0 and 2 days;

○ $[Al^{3+}] \geq 3.5$ mM after 28 days.

The solubility profiles disclosed herein are measured under the following conditions: 250 mL volume of an aqueous solution at pH = 13: [NaOH] = 137 mmol/L; [Al] theoretical = 18 mmol/L; T = 20°C, stirring with a stirrer at 300 rpm. Sampling of the solution was done during the test. The [Al3+] concentration in solution samples was determined using an inductively coupled plasma spectrometry (ICP-OES Optima 7000 DV). Note that the [Al] theoretical concentration refers to the concentration of $[Al^{3+}]$ which would be present in the aqueous solution if all the aluminum source would be completely dissolved.

Indeed the specific $[Al^{3+}]$ sources of the compositions according to the present invention feature:

○ a limited enrichment of aluminum in solution at a first stage, in order to avoid inhibiting the dissolution and reaction of the binder precursor (e.g. precursors containing silica, such as GGBS) ; and

○ a sufficient enrichment of aluminum at a later stage in order to protect the product against the ASR.

In that context, the solubility kinetics profile of the aluminum source, as defined in the present invention, having a $[Al^{3+}] \leq 3$ mM between 0 and 2 days and a $[Al^{3+}] \geq 3.5$ mM after 28 days, may be advantageously achieved by selecting said $[Al^{3+}]$ source in function of the type of aluminum containing source and the fineness thereof (for example, as measured by particle size distribution with $d_{10}$, $d_{50}$ and $d_{90}$ values and/or specific surface).

In some embodiments, the $[Al^{3+}]$ source is an aluminum containing mineral selected from the group consisting of a monohydrate or trihydrate bauxite or a monohydrate or trihydrate bauxite containing mineral, a clay including activated and amorphized clay variants, a laterite, natural amorphous minerals enriched in aluminum, $Al(OH)_3$ bayerite, $Al(OH)_3$ gibbsite, hydratable aluminum, $Al_2O_3 \cdot 3H_2O$, specialty aluminum, calcium aluminate cement(CAC), calcium sulfoaluminate cement (CSA), synthetic aluminum silicates and aluminum dross, or a mixture thereof.

Monohydrate and trihydrate bauxites may be selected from the group consisting of nepheline, leucite, sillimanite, andalusite, kyanite (dysthene) and muscovite.

Clays may be selected from a kaolinite, and illite or a montmorillonite, as well as activated and amorphized variants thereof. Laterites may also include activated laterite variants.

Natural amorphous minerals enriched in aluminum include allophanes and imogolites.

Hydratable aluminum are aluminum, mostly amorphous, obtained by flash calcination of bayerite, including commercial products such as Axilat SA 502 de Synthomer.

Specialty aluminum are products obtained from calcination of bayerite, such as boehmite or diaspore.

Synthetic aluminum silicates are synthetic silico-aluminates including commercial products such as Sylowhite de Grace® products.

Aluminum dross is a waste product resulting from aluminum production which contains between 60% and 80% aluminum (i.e. $Al(O)_3$).

In some embodiments the $[Al^{3+}]$ source features a solubility profile at pH= 13 and 20°C, comprising:

○ $[Al^{3+}] \leq 3$ mM between 0 and 2 days;

∘ $[Al^{3+}] \geq 3.5$ mM after 28 days;

wherein said solubility profile is obtained by selecting:

- the type of aluminum containing source; and

- the fineness of the aluminum containing source (for example, as measured by the specific surface and/or the particle size distribution).

Indeed, by selecting appropriately the specific aluminum containing source and fineness thereof (for example, as measured by particle size distribution with $d_{10}$, $d_{50}$ and $d_{90}$ values and/or specific surface) of a specific $[Al^{3+}]$ source, the solubility profile defined in the present invention may be achieved, thereby providing alkali-activated hydraulic binder compositions, as well as mortar and concrete compositions which effectively reduce ASR.

In a preferred embodiment, the $[Al^{3+}]$ source is $Al(OH)_3$ having a specific surface of 6 m$^2$/g, a $d_{10}$ of 0.5 $\mu$m, a $d_{50}$ of 1.3 $\mu$m and a $d_{90}$ of 3 $\mu$m.

_Definitions_

According to the terminology of this text, the following non limitative definitions have to be taken into consideration:

The term "binder" refers to "hydraulic binder" meaning any material that hardens just by adding water, like cement.

The term "cement" is understood as meaning a powdery substance made for use in making mortar or concrete. They are mineral binders, possibly free from any organic compound. It refers to any ordinary cement and it includes Ordinary Portland Cement, blends of Ordinary Portland Cement, Pozzolanic materials and/or Filler and alkali-activated based cements.

The term "clinker" is understood as the main constituent phase of Ordinary Portland Cement obtained from the co-calcination of limestone and an aluminosilicate source.

"slag" denotes a stony by-product matter separated from metals during the smelting or refining of ore.

"GGBS" or "GGBFS": Ground Granulated Blast Furnace Slag, which is equivalent to blast furnace slag, Granulated Blast Furnace Slag (GBFS), blast furnace water-crushed slag powder and blast furnace slag fine aggregate.

"alkali activator" are chemical compounds bearing either sodium, potassium or lithium cations, that increases pH value of an aqueous solution above their neutral state. A test for determining whether an alkali compounds is an alkali activator according to the invention, could be adding said alkali compound into a deionized water so as to obtain a concentration of said alkali compound of 1 mol.L$^{-1}$ at a temperature of 20°C, if the pH is increased to a value above at least 7.5, after complete dissolution of said alkali compound.

The terms "mortar composition" or "concrete composition" refer to a material composed of binder(s), aggregates such as sand and gravel and other components, like admixtures.

Accordingly, the term "composition" or "construction composition" refers to a mortar composition or to a concrete composition according to the present invention.

"Hardened mortar product" or "hardened concrete product" refers to the hardened product obtained, respectively, from a mortar composition or from a concrete composition, after binder hydration. Accordingly, the term "hardened product" or "hardened construction product" refers to a hardened mortar product or to a hardened concrete product according to the present invention.

The mortar compositions and concrete compositions of the invention, comprising an alkali activated GGBS-based hydraulic binder, are dry compositions which are susceptible to being mixed with water to provide a hardened product. In that connection, when a % is given relative to the total dry weight of the hydraulic binder, or relative to the total dry weight of the mortar or concrete composition, is to be understood that the dry weight of the hydraulic binder composition or dry weight of the concrete or mortar compositions of the invention may content some moisture, but it essentially contains solid components which are intended to be mixed with water before its application.

"$d_{10}$" gives the median size of the granulometric distribution of material's particles (usually in micrometers for cementation materials). It means that 10% of the particles have a size less than the $d_{10}$ number and 90% of the particles have a size greater than the $d_{10}$ number. The measurement of $d_{10}$ is done by Laser diffraction analysis, also known as Laser diffraction spectroscopy, by means of Laser diffraction analyzer such as "SYMPATEC" and commercialized by the SYMPATEC company, with the dry way method.

"$d_{50}$" gives the median size of the granulometric distribution of material's particles (usually in micrometers for cementation materials). It means that 50% of the particles have a size less than the $d_{50}$ number and 50% of the particles have a size greater than the $d_{50}$ number. The measurement of $d_{50}$ is done by Laser diffraction analysis, also known as Laser diffraction spectroscopy, by means of Laser diffraction analyzer such as "SYMPATEC" and commercialized by the SYMPATEC company, with the dry way method.

"$d_{85}$" gives the median size of the granulometric distribution of material's particles (usually in micrometers for cementation materials). It means that 85% of the particles have a size less than the $d_{85}$ number and 15% of the particles have a size greater than the $d_{85}$ number. The measurement of $d_{85}$ is done by Laser diffraction analysis, also known as Laser diffraction spectroscopy, by means of Laser diffraction analyzer such as " SYMPATEC " and commercialized by the SYMPATEC company, with the dry way method.

"$d_{90}$" gives the median size of the granulometric distribution of material's particles (usually in micrometers for cementation materials). It means that 90% of the particles have a size less than the $d_{90}$ number and 10% of the particles have a size greater than the $d_{90}$ number. The measurement of $d_{90}$ is done by Laser diffraction analysis, also known as Laser diffraction spectroscopy, by means of Laser diffraction analyzer such as " SYMPATEC " and commercialized by the SYMPATEC company, with the dry way method.

The term "specific surface" refers to the total surface area of the particles of a material per unit of mass. The measurement of the specific surface is carried out by adsorption using the Brunauer-Emmet -Teller adsorption method (BET)

### *The ground granulated blast furnace slag*

The compositions according to the invention comprise alkali-activated hydraulic binders which may advantageously contain ground granulated blast furnace slag having a $d_{50}$ between 7.5 $\mu$m and 12 $\mu$m and a $d_{85}$ between 19 $\mu$m and 29 $\mu$m.

In an embodiment the ground granulated blast furnace slag has a $d_{10}$ between 0.5 $\mu$m and 1.7 $\mu$m.

In a preferred embodiment, the ground granulated blast furnace slag further has a $d_{90}$ between 25 $\mu$m and 32 $\mu$m.

In an embodiment the ground granulated blast furnace slag has a $d_{50}$ between 8 $\mu$m and 10 $\mu$m.

In an embodiment the ground granulated blast furnace slag has a $d_{85}$ between 21 $\mu$m and 25 $\mu$m.

In an embodiment the ground granulated blast furnace slag has a $d_{90}$ between 27 $\mu$m and 30 $\mu$m.

This particular granulometry can be obtained by controlling the grinding of the blast furnace slag.

### *Hydraulic binder composition*

The hydraulic binders disclosed herein comprise an alkali activator. In some embodiments, the alkali activator is selected from the group consisting of $Na_2CO_3$, $Li_2CO_3$, $K_2CO_3$, $Na_2SiO_3$, $Li_2SiO_3$, $K_2SiO_3$, NaOH and KOH.

In addition, the hydraulic binders disclosed herein comprise one or more precursors selected from the group consisting of fly ashes (class F and C), natural & synthetic pozzolans, calcinated clays (including metakaolin), silica fumes, rice husk ashes, paper sludge ashes, bottom ashes, incinerated bottom ashes, recycled glasses, steel slags, stainless steel slag, phosphorous slags, copper slags, ladle slags, red muds, cement kiln dusts and biomass ashes, or mixtures thereof.

In some embodiments, the alkali-activated hydraulic binders disclosed in the present disclosure include GGBS, and said hydraulic binders comprise:

  ◦ an alkali activator; and
  ◦ between 35 dry weight% and 95 dry weight%, preferably between 50 dry weight% and 80 dry weight%, more preferably between 60 dry weight% and 75 dry weight%, of ground granulated blast furnace slag, being said % relative to the total dry weight of the hydraulic binder, as defined in the claims and in the present description.

Other additional components of the hydraulic binder composition may be fillers, cement, such as Portland cement, a sulfate source, such as $Na_2SO_4$, $K_2SO_4$, $CaSO_4$, and other mineral additions.

The alkali activator is preferably selected from the group consisting of $Na_2CO_3$, $Li_2CO_3$, $K_2CO_3$, $Na_2SiO_3$, $Li_2SiO_3$, $K_2SiO_3$, NaOH and KOH, more preferably $Na_2CO_3$.

In some embodiments the alkali activator is in a dry weight % of between 5 dry weight % and 10 dry weight %, preferably 7.5 dry weight %, being said % relative to the total dry weight of the binder, as defined herein.

In one embodiment the hydraulic binder comprises between 35 dry weight% and 95 dry weight% preferably between 50 dry weight% and 80 dry weight%, more preferably between 60 dry weight% and 75 dry weight%, of ground granulated blast furnace slag, being said % relative to the total dry weight of the binder, as defined herein.

### *The aggregates*

Aggregates comprise a large category of particulate material used in construction, including fillers, sands, gravels, crushed stones, slag (not-granulated), recycled concrete and geosynthetic aggregates. They serve as reinforcement to add strength to the overall composite material.

The compositions according to the present invention comprise aggregates comprising a reactive silica source. The term "aggregates comprising a reactive silica source" or "aggregates comprising reactive silica" refers to any types of aggregates comprising silica which is able to react significantly with the pore solution of the hardened concrete or mortar product. Not all forms of silica react significantly with the pore solution, and therefore, not all types of aggregate containing silica are prone to ASR. As a general rule, the more amorphous (i.e. more disordered) the structure of the silica containing mineral is, the more unstable will be the aggregate containing said mineral at high pH and thus, said aggregate will be more prone to reaction with the high pH pore solution, resulting in ASR. Examples of silica minerals considered to be alkali-silica reactive are opal, tridymite, cristobalite, volcanic glass, chert, cryptocrystalline (or microcrystalline) quartz, and strained quartz, among others. These minerals may be found in the following rock types: shale, sandstone, silicified carbonate rocks, chert, flint, quartzite, quartz-arenite, gneiss, argillite, granite, greywacke, siltstone, arenite, arkose, and hornfels, among others. Accordingly, aggregates comprising a reactive silica source may be selected from one or more aggregates types comprising minerals selected from the group consisting of opal, tridymite, cristobalite, volcanic glass, chert, cryptocrystalline (or microcrystalline) quartz, and strained quartz, or a combination thereof. Advantageously, aggregates comprising a reactive silica source comprise one or more rock types selected from the group consisting of opaline cherts; rhyolites; opaline concretions; chalcedonic cherts; dacites; fractured, strained, and limestone-filled quartz and quartzites; quartzose cherts; andesites; siliceous limestones; siliceous shales; siliceous dolomites; and phylites.

*The mortar composition and concrete composition*

As mentioned above, the invention concerns a mortar composition or a concrete composition.

In particular, the terms "mortar" or "mortar composition" refer to a material composed of binder(s), aggregates such as sand and other components, like admixtures; and the terms "concrete" or "concrete composition" refer to a material comprising a hydraulic binder and aggregates such as sand and gravel and other components, like admixtures. In general mortar composition and concrete composition refer to compositions that are in the form of powder and ready to be mixed with water. In other words, the concrete or mortar compositions of the invention may content some moisture, but they essentially contain solid components which are intended to be mixed with water before their application.

The mortar and concrete compositions according to the claims and the present description comprise:

    ◦ a hydraulic binder as defined in the claims and the present description;

    ◦ aggregates comprising a reactive silica source;

    ◦ an $[Al^{3+}]$ source in a concentration $\leq 10$ dry weight%, preferably $\leq 6$ dry weight%, more preferably between 1 dry weight% and 5 dry weight%, being said % relative to the total dry weight of the binder;

wherein the $[Al^{3+}]$ source features a solubility profile, at pH= 13 and 20°C, comprising:

    ◦ $[Al^{3+}] \leq 3$ mM between 0 and 2 days;

    ◦ $[Al^{3+}] \geq 3.5$ mM after 28 days.

Aggregates comprise a large category of particulate material used in construction, including sands, gravels, crushed stones, slag (not granulated), recycled concrete and geosynthetic aggregates. They serve as reinforcement to add strength to the overall composite material.

In some embodiments, the construction composition is a mortar composition and the aggregates comprise sand and other components, like admixtures. In general, the mortar composition comprises aggregates having an average particle size lower than 10 mm, preferably lower than 5 mm.

In other embodiments, the construction composition is a concrete composition and the aggregates comprise sand, gravel and other components, like admixtures. In general, the concrete composition comprises aggregates having an average particle size lower than 30 mm, preferably, lower than 25 mm.

In some embodiments, the mortar and concrete composition comprise between 15% and 40%, preferably between 18% and 28% of a hydraulic binder as defined in the claims and the present description, and between 60% and 85% of aggregates, preferably between 70% and 82% of aggregate, as defined in the claims and the present description, said % being relative to the total dry weight of the mortar or concrete composition.

Advantageously, said concrete composition or mortar composition can also include, apart from aggregates, one or several ingredients, especially functional admixtures, additions and fibers, which can be one or more of the other optional components mentioned below.

*Other optional components*

The binder composition is advantageously enriched with one or several other components which are ingredients, notably functional additives preferably selected in the following list:

• *Water retention agent.*

A water retention agent has the property to keep the water of mixing before the setting. The water is so trapped in the wet formulation paste which improves its bond. To some extent, the water is less absorbed by the support.
The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

• *Rheological agent*

The possible rheological agent (also named a "thickener") is preferably chosen in the group comprising, more preferably consisting of: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

• *Defoamer/Antifoams*

The possible defoamer is preferably chosen in the group comprising, more preferably consisting of: polyether polyols and mixes thereof.

• *Biocide*

The possible biocide is preferably chosen in the group comprising, more preferably consisting of: mineral oxides like zinc oxide and mixes thereof.

• *Pigment*

The possible pigment is preferably chosen in the group comprising, more preferably consisting of: $TiO_2$, iron oxide and mixes thereof.

• *Flame retardant*

Flame retardant (or flame proof agent) makes it possible to increase the fire resistance and/or to shrink the speed of flame spreading of the composition.

• *Air-entraining agents*

Air-entraining agents (surfactants) are advantageously chosen in the group comprising, more preferably consisting of, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting of, the sulfonate olefins, the sodium lauryl sulfate and their mixes.

• *Retarders*

Retarders are advantageously chosen in the group comprising, more preferably consisting of, tartric acid and its salts: sodium or potassium salts, citric acid and its salts: sodium (trisodic citrate) and their mixes.

• Accelerators

Accelerators are advantageously chosen in the group comprising, alkaline metal salts more preferably consisting of sodium chloride, calcium formate, and lithium salts.

In addition, other components may be:

- *Plasticizers*

- *Fibres*

- *Dispersion powders*

- *Polymeric resins*

- *Complexing agents*

- *Drying shrinkage reducing agents based on polyols.*

The total content of these optional other components in the concrete composition or mortar composition is preferably comprised between 0.1% and 10% by weight of the total weight of the concrete composition or mortar composition.

*The hardened mortar product or hardened concrete product*

As mentioned above, the invention concerns in addition a hardened mortar product or hardened concrete product obtained from the mortar composition or concrete composition defined in the claims and the present description, by setting and hardening of a mixture of, respectively, the mortar composition or the concrete composition, according to the present invention, and water.

**Brief Description of Drawings**

Other features, details and advantages will be shown in the following detailed description and on the figures, on which:

**Fig. 1.** Aluminum $[Al^{3+}]$ concentration as a function of time in a solution at pH = 13 at 20°C

**Fig. 2** Compression strength of sodium carbonate-activated GGBS containing concrete cubes under sealed conditions.

**Fig. 3** Expansion of 7x7x28 cm concrete prisms at 60°C.

**Examples**

Sodium carbonate-activated GGBS containing concretes were obtained using a flint (or silex) aggregate (0/4 mm) from the Bouafles quarry (density 2550 kg/m3 ; reactive silica content 23%). The concrete was manufactured in compliance with EN 12390-2.

One type of the concrete products obtained contained no source of aluminum, while the others contained various sources of aluminum listed in Table 1. These sources were added at a percentage of 3 dry weight% of the total dry binder weight.

**Table 1:** chemical and physical properties of the different $[Al^{3+}]$ sources tested

|  | AlOOH-5 | AlOOH-18 | $Al(OH)_3$-6 |
|---|---|---|---|
| Chemical composition | AlOOH | AlOOH | $Al(OH)_3$ |
| Degree of purity (%) | 99.0 | 98.5 | 98.5 |
| Specific surface ($m^2/g$) | 5 | 18 | 6 |
| $D_{10}$ ($\mu$m) | 0.6 | 0.2 | 0.5 |
| $D_{50}$ ($\mu$m) | 1.2 | 0.3 | 1.3 |
| $D_{90}$ ($\mu$m) | 2.0 | 0.6 | 3.0 |

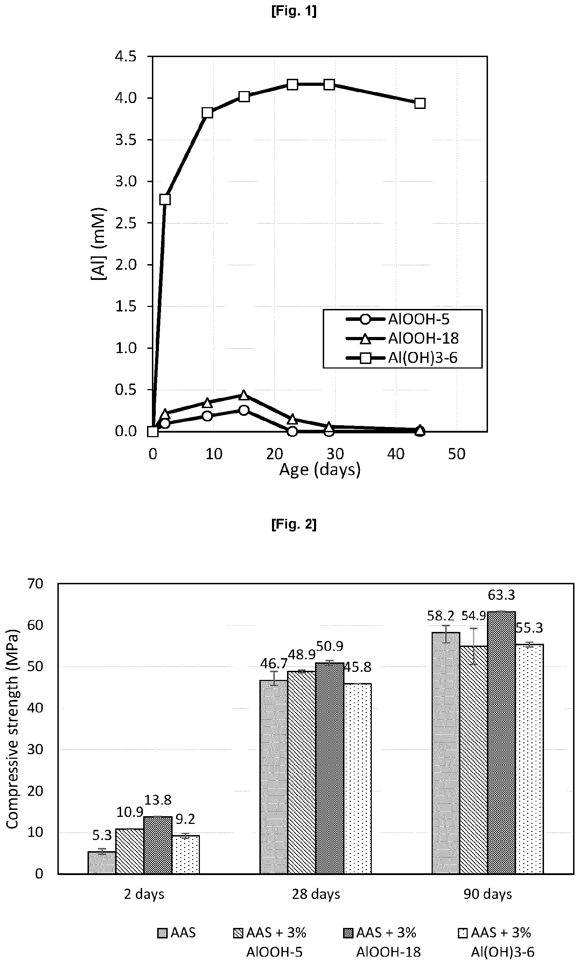

The solubility profiles for the various aluminum sources are shown in **Figure 1**. The assay was carried out under the following conditions: 250 mL volume of an aqueous solution at pH = 13: [NaOH] = 137 mmol/L; [Al] theoretical = 18 mmol/L; T = 20°C, stirring with a stirrer at 300 rpm. Sampling of the solution was done during the test. The [Al3+] concentration in solution samples was determined using an inductively coupled plasma spectrometry (ICP-OES Optima 7000 DV).

Compressive strength was measured on 10 cm square cubes (NF EN 12390-3) cured at 20°C in sealed conditions and it is shown in Figure **2**. Samples were de-molded 48 hours after curing and stored under sealed curing conditions.

The three tested [$Al^{3+}$] sources, AlOOH-5, AlOOH-18 and Al(OH)3-6, increased compressive strength at 2 days by 105.7, 160.4 and 73.6%, respectively. The increase in compressive strength at this age could be explained by a nucleation effect leading to the precipitation of a greater quantity of hydration products.

At 28 days of age, only the concrete containing Al(OH)3-6 showed a slightly lower compressive strength than the reference AAS concrete (AAS concrete= concrete without added Al source). At older ages (90 days), the addition of Al(OH)3-6 and AlOOH-5 showed slightly lower compressive strengths than AAS concrete without added aluminum.

Expansion measurements on concrete were tested in accordance with RILEM AAR-4.1 recommendations. Concrete prisms measuring 7x7x28 cm were cast to test expansion in concrete due to ASR. After the concrete had been poured, the prisms were stored at a temperature of (20 ± 2)°C for 48 hours, covered with a plastic film. After demolding, an initial reading on the dial gauge (C) was taken using an Invar rod of length I = 280 mm to calibrate the length of the measuring device. The prisms were then immersed for (30 ± 5) minutes in water (20 ± 2°C) and a second reading on the dial indicator (C0) was taken.

After the second measurement, the samples were stored in sealed containers, each containing 6 prisms. The containers (with 35 mm of water at the bottom) were then placed in a reactor with an air temperature of 60°C and a relative humidity of 98%. The aluminum-containing concrete samples were kept for a total of 30 days under sealed conditions before being heated to 60°C.

At the set times, the sealed container was removed from the reactor and stored at (20 ± 2)°C for (24 ± 2) hours before the length (Ct) of each prism was measured.

Each change in length was calculated as a percentage of the initial length (I) of the corresponding prism, to the nearest 0.001%. (Eq. 1).

$$\varepsilon_t = \frac{C_t - C_0}{l + C_0} \times 100 \qquad \text{Eq. 1}$$

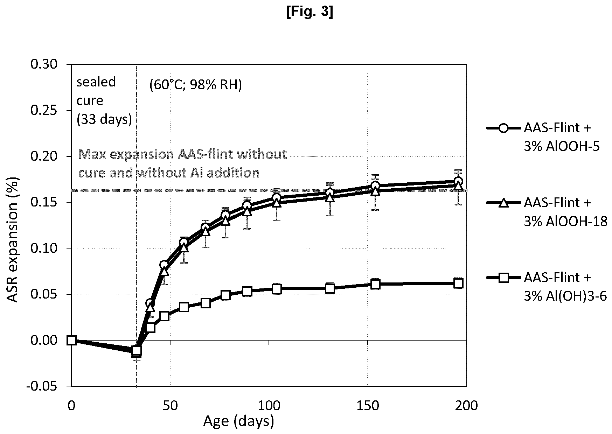

The expansion results are shown in **Figure 3**. Expansions in AAS concrete with AlOOH (having 2 different specific surface areas) stabilized at a value of around 0.16%. This value was comparable to that obtained in AAS-flint concrete where no aluminum source was added (horizontal dotted line). When the Al(OH)3 source was tested, the expansions stabilized at values around 0.06% lower. The Al(OH)3 source was effective in reducing expansions as it ensured sufficient Al concentration to prevent the dissolution of silica from the aggregate. At the same time, at young ages, this source did not prevent slag dissolution. However, it did have a beneficial effect on the development of compressive strength. The other two $Al^{3+}$ sources (AlOOH), showed a beneficial effect on compressive strengths, but the $Al^{3+}$ concentration was not sufficient to inhibit the dissolution of aggregate silica in the long term, and therefore were not effective reducing ASR.

## Claims

1. A hydraulic binder composition for the preparation of a mortar composition or a concrete composition, said hydraulic binder composition comprising:

    - an alkali activator; preferably selected from the group consisting of $Na_2CO_3$, $Li_2CO_3$, $K_2CO_3$, $Na_2SiO_3$, $Li_2SiO_3$, $K_2SiO_3$, NaOH and KOH, more preferably $Na_2CO_3$;
    - an [$Al^{3+}$] source in a concentration ≤ 10 dry weight%, preferably ≤ 6 dry weight%, more preferably between 1 dry weight% and 5 dry weight%, being said % relative to the total dry weight of the binder;

    wherein the [$Al^{3+}$] source features a solubility profile, at pH= 13 and 20°C, comprising:

    ◦ [$Al^{3+}$] ≤ 3 mM between 0 and 2 days;
    ◦ [$Al^{3+}$] ≥ 3.5 mM after 28 days.

2. A concrete composition or a mortar composition;

the concrete composition being susceptible to form a hardened concrete product and the mortar composition being susceptible to form a hardened mortar product;
said concrete composition and said mortar composition comprising:

- a hydraulic binder comprising:

  ◦ an alkali activator; preferably selected from the group consisting of $Na_2CO_3$, $K_2CO_3$, $Na_2SiO_3$, $Li_2SiO_3$, $K_2SiO_3$, NaOH and KOH, more preferably $Na_2CO_3$;

- aggregates comprising a reactive silica source;
- an [$Al^{3+}$] source in a concentration ≤ 10 dry weight%, preferably ≤ 6 dry weight%, more preferably between 1 dry weight% and 5 dry weight%, being said % relative to the total dry weight of the binder;

wherein the [$Al^{3+}$] source features a solubility profile, at pH= 13 and 20°C, comprising:

  ◦ [$Al^{3+}$] ≤ 3 mM between 0 and 2 days;
  ◦ [$Al^{3+}$] ≥ 3.5 mM after 28 days.

3. The compositions according to any of claims 1 or 2, wherein the [$Al^{3+}$] source is an aluminum containing mineral selected from the group consisting of a monohydrate or trihydrate bauxite or a monohydrate or trihydrate bauxite containing mineral, a clay including activated and amorphized clay variants, a laterite, natural amorphous minerals enriched in aluminum, $Al(OH)_3$ bayerite, $Al(OH)_3$ gibbsite, hydratable aluminum, $Al_2O_3 \cdot 3H_2O$, specialty aluminum, CAC, CSA, synthetic aluminum silicates and aluminum dross.

4. The compositions according to any of claims 1 to 3, wherein the [$Al^{3+}$] source is an $Al(OH)_3$ source comprising a $d_{10}$ of 0.5 μm, a $d_{50}$ of 1.3 μm and a $d_{90}$ of 3 μm, and a specific surface of 6 $m^2/g$.

5. The compositions according to any of claims 1 to 4, further comprising between 35 dry weight% and 95 dry weight%, preferably between 50 dry weight% and 80 dry weight%, more preferably between 60 dry weight% and 75 dry weight%, of ground granulated blast furnace slag, being said % relative to the total dry weight of the binder.

6. The compositions according to claim 5, wherein the ground granulated blast furnace slag having a $d_{50}$ between 7.5 μm and 12 μm and a $d_{85}$ between 19 μm and 29 μm.

7. The compositions according any of claims 2 to 6, wherein the aggregates comprising reactive silica comprise one or more rock types selected from the group consisting of opaline cherts; rhyolites; opaline concretions; chalcedonic cherts; dacites; fractured, strained, and limestone-filled quartz and quartzites; quartzose cherts; andesites; siliceous limestones; siliceous shales; siliceous dolomites; and phyllites.

8. The concrete composition according to any of claims 1 to 7, wherein the aggregates comprising reactive silica comprise sand and gravel.

9. The mortar composition according to any of claims 1 to 7, wherein the aggregates comprising reactive silica comprise sand.

10. A hardened concrete product obtainable by setting and hardening of a concrete composition according to claim 8.

11. A hardened mortar product obtainable by setting and hardening of a mortar composition according to claim 9.

12. Use, in a concrete composition or in a mortar composition comprising aggregate containing reactive silica and an alkali-activated hydraulic binder; being the concrete composition susceptible to form a hardened concrete product and being the mortar composition being susceptible to form a hardened mortar product;

of an [$Al^{3+}$] source for reducing alkali-silica reaction;
wherein the [$Al^{3+}$] source features a solubility profile, at pH= 13 and 20°C, comprising:

◦ $[Al^{3+}] \leq 3$ mM between 0 and 2 days;

◦ $[Al^{3+}] \geq 3.5$ mM after 28 days.

13. Use according to claim 12, wherein the [$Al^{3+}$ source is an aluminum ontaining mineral selected from the group consisting of a monohydrate or trihydrate bauxite or a monohydrate or trihydrate bauxite containing mineral, a clay including activated and amorphized clay variants, a laterite, natural amorphous minerals enriched in aluminum, $Al(OH)_3$ bayerite, $Al(OH)_3$ gibbsite, hydratable aluminum, $Al_2O_3 \cdot 3H_2O$, specialty aluminum, CAC, CSA, synthetic aluminum silicates and aluminum dross.

14. Use according to any of claims 12 or 13, wherein the [$Al^{3+}$ source is $Al(OH)_3$ comprising a $d_{10}$ of 0.5 $\mu$m, a $d_{50}$ of 1.3 $\mu$m and a $d_{90}$ of 3 $\mu$m and a specific surface of 6 $m^2$/g.

15. Use according to any of claims 12 to 14, wherein said alkali-activated hydraulic binder comprises ground granulated blast furnace slag.

[Fig. 1]

[Fig. 2]

[Fig. 3]

| | Europäisches Patentamt European Patent Office Office européen des brevets | **EUROPEAN SEARCH REPORT** | Application Number EP 23 30 6231 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/140333 A1 (KINNEY FREDERICK D [US] ET AL) 7 May 2020 (2020-05-07) * example 15; table 3 * * example 19; table 4 * | 1,3 | INV. C04B28/08 C04B28/00 |
| X A | EP 3 862 335 A1 (HOLCIM TECHNOLOGY LTD [CH]) 11 August 2021 (2021-08-11) * paragraphs [0025], [0047] * * page 7 - page 8; example 1; table 1 * | 2,3,5-11 4,14 | ADD. C04B111/20 |
| X | KRIVENKO PAVEL ET AL: "Mechanism of preventing the alkali-aggregate reaction in alkali activated cement concr", CEMENT AND CONCRETE COMPOSITES, ELSEVIER APPLIED SCIENCE, BARKING, GB, vol. 45, 11 October 2013 (2013-10-11), pages 157-165, XP028795766, ISSN: 0958-9465, DOI: 10.1016/J.CEMCONCOMP.2013.10.003 | 12,13,15 | |
| A | * page 160, paragraph 3.2 - page 161 * | 1,2 | |
| A | US 2016/214899 A1 (KOCH GERHARD [AT]) 28 July 2016 (2016-07-28) * examples 1,2 * | 1,2,12 | TECHNICAL FIELDS SEARCHED (IPC) C04B |
| A | WO 2015/087255 A1 (UNIV PRETORIA [ZA]) 18 June 2015 (2015-06-18) * claim 1 * | 1,12 | |
| | -/-- | | |

The present search report has been drawn up for all claims

| Place of search The Hague | Date of completion of the search 17 January 2024 | Examiner Kolb, Ulrike |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 30 6231

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUAN B ET AL: "Phase modification induced drying shrinkage reduction on Na2CO3activated slag by incorporating Na2SO4", MATERIALS AND STRUCTURES, SPRINGER NETHERLANDS, DORDRECHT, vol. 50, no. 5, 6 September 2017 (2017-09-06), pages 1-11, XP036313352, ISSN: 1359-5997, DOI: 10.1617/S11527-017-1088-5 [retrieved on 2017-09-06] * abstract * | 1,2 | |

TECHNICAL FIELDS
SEARCHED        (IPC)

The present search report has been drawn up for all claims

| Place of search | Date of completion of the search | Examiner |
|---|---|---|
| The Hague | 17 January 2024 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 30 6231

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2024

| Patent document cited in search report | Publication date | Patent family member(s) | | Publication date |
|---|---|---|---|---|
| US 2020140333 A1 | 07-05-2020 | AU | 2019374104 A1 | 03-06-2021 |
| | | BR | 112021008404 A2 | 21-09-2021 |
| | | CN | 113056443 A | 29-06-2021 |
| | | EP | 3873868 A1 | 08-09-2021 |
| | | IL | 282839 A | 30-06-2021 |
| | | JP | 7122468 B2 | 19-08-2022 |
| | | JP | 2022506806 A | 17-01-2022 |
| | | KR | 20210087504 A | 12-07-2021 |
| | | KR | 20230023071 A | 16-02-2023 |
| | | PH | 12021551020 A1 | 21-02-2022 |
| | | SG | 11202104265S A | 28-05-2021 |
| | | US | 2020140333 A1 | 07-05-2020 |
| | | WO | 2020092858 A1 | 07-05-2020 |
| | | ZA | 202102818 B | 26-10-2022 |
| EP 3862335 A1 | 11-08-2021 | EP | 3862335 A1 | 11-08-2021 |
| | | EP | 4100379 A1 | 14-12-2022 |
| | | WO | 2021156808 A1 | 12-08-2021 |
| US 2016214899 A1 | 28-07-2016 | CN | 104513034 A | 15-04-2015 |
| | | EP | 2853519 A1 | 01-04-2015 |
| | | RU | 2016113378 A | 01-11-2017 |
| | | US | 2016214899 A1 | 28-07-2016 |
| | | WO | 2015044381 A1 | 02-04-2015 |
| WO 2015087255 A1 | 18-06-2015 | AU | 2014363056 A1 | 30-06-2016 |
| | | EP | 3080053 A1 | 19-10-2016 |
| | | WO | 2015087255 A1 | 18-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017198930 A
- WO 2019110134 A